# EUROPÄISCHE PATENTSCHRIFT

(11) **EP 1 314 065 B1**
(45) Veröffentlichungstag und Bekanntmachung des Hinweises auf die Patenterteilung: **14.04.2004**
(21) Anmeldenummer: 01959952.1
(22) Anmeldetag: 13.08.2001
(51) Int. Cl.: G03B 1/08

(54) **FOTOAPPARAT**
CAMERA
APPAREIL PHOTO

(30) Priorität: 14.08.2000 AT 14002000
(43) Veröffentlichungstag der Anmeldung: 28.05.2003
(73) Patentinhaber: Lomographische AG, 1150 Wien (AT)
(72) Erfinder: PAVICSITS, Bernhard, A-2435 Ebergassing (AT)
(74) Vertreter: Torggler, Paul Norbert, Dr.
(86) Internationale Anmeldenummer: PCT/AT2001/000267
(87) Internationale Veröffentlichungsnummer: WO 2002/014945

(56) Entgegenhaltungen:
- DE-A- 19 522 742
- US-A- 3 426 663
- US-A- 3 866 602
- US-A- 4 038 977
- US-A- 4 164 333

## Beschreibung

Die Erfindung betrifft einen Fotoapparat mit einer Transportvorrichtung zum schrittweisen Transport eines Filmes um jeweils eine Bildlänge, wobei die Transportvorrichtung eine über eine Wickelspule, auf der ein Zugelement, vorzugsweise eine Schnur, aufgewickelt ist, angetriebene Filmaufnahmewelle umfaßt, auf der der Film von einer Filmvorratsspule, insbesondere von einer eingelegten Filmpatrone aus aufwickelbar ist.

Bei fotografischen Kameras ist es üblich, den in Filmpatronen lichtgeschützt aufgerollten Filmstreifen zum Zwecke der Belichtung schrittweise aus der Filmpatrone vorbei an einem Belichtungsfenster auf eine Filmaufnahmewelle zu transportieren. Bei den bekannten Fotoapparaten erfolgt der Transport des Filmes üblicherweise durch händisches Betätigen eines Spulrades oder eines Aufzughebels oder mittels eines Elektromotors.

So ist aus der US 3,426,663 eine Endoskopkamera bekannt, bei der der Transport des Filmes über einen Bodenseilzug, der einen Betätigungshebel umfaßt, erfolgt. Aus der US 4,164,333 ist es ebenfalls bei einer Endoskopkamera bekannt, den Film mittels über eines längs des Endoskops nach außen führenden Zugelementes fortzuschalten, wobei das freie Ende des Zugelementes mit einem am Endoskop angebrachten Spulenrad verbunden ist, sodaß der Transport des Filmes durch Drehen an diesem Spulenrad erfolgt. Sowohl die US 3,866,602 als auch die US 4,038,977 beschreiben Transportvorrichtungen bei Endoskopkameras, bei denen der Film schrittweise transportiert wird.

Aufgabe der Erfindung ist es, einen neuartigen Fotoapparat zu schaffen, der einen einfach zu bedienenden Transportmechanismus aufweist

Erfindungsgemäß wird dies dadurch erreicht, daß das freie Ende des Zugelements durch eine Öffnung im Gehäuse des Fotoapparates ins Freie ragt und der Film durch Ziehen am Zugelement jeweils schrittweise um eine Bildlänge transportiert wird, wobei die Wickelspule zum automatischen Aufwickeln des Zugelementes nach dem Transport des Filmes um eine Bildlänge ausgebildet ist

Bei einem derart ausgebildeten Fotoapparat erfolgt also zwischen der einzelnen Belichtung der Filmtransport um eine Bildlänge durch Ziehen an einem Zugelement, beispielsweise einer Schnur. Unter einer Bildlänge wird dabei der Filmvorschub zwischen zwei Belichtungen verstanden, nämlich die Summe aus der Länge des belichteten Negatives (z.B. 36 mm) und dem üblichen Zwischenraum zwischen den belichteten Negativen.

Aus der Deutschen Patentschrift DE 195 22 742 ist zwar eine fotografische Kamera bekannt, bei der der gesamte Filmstreifen vor seiner Belichtung aus der Filmpatrone durch Ziehen an einer Schnur, die auf einer Haspel, die mit der Filmaufwickelspule verbunden ist, aufgewickelt ist, auf die Filmaufwickelspule in einem Zug aufgewickelt wird und die Schnur nach erfolgtem Aufwickeln von der Kamera entfernt wird. Es erfolgt dort aber kein schrittweiser Filmtransport über eine Schnur zwischen den Belichtungen. Dieser erfolgt dort - wie üblich - über ein Handrad.

Der erfindungsgemäße Fotoapparat ist vorzugsweise als Einwegkamera ausgebildet, die bereits vom Kamerahersteller mit einem fotografischen Film bestückt wird und nach der Belichtung desselben samt dem Filmstreifen zur Filmentwicklung an ein Entwicklungslabor gesandt wird. Die Länge der Schnur braucht, da sie nach jedem Aufziehvorgang wieder auf die Wickelspule aufgewickelt wird, nicht der Länge eines Filmes - ein 24x36 mm Film ist in etwa 90 cm lang - entsprechen. Es genügt, wenn die Schnur so lang ist, daß sie den Film um eine Bildlänge, beispielsweise 36 mm plus Negativabstand, transportieren kann.

Um einem Benutzer die Handhabung des erfindungsgemäßen Fotoapparates möglichst zu vereinfachen, kann gemäß einer weiteren vorteilhaften Ausgestaltung der Erfindung vorgesehen sein, daß an dem freien Ende der Schnur ein Halteelement, beispielsweise ein Ring angeordnet ist.

Weitere Vorteile und Einzelheiten der Erfindung werden anhand der nachfolgenden Figurenbeschreibung näher erläutert. Darin zeigt
- Fig. 1: die Vorderansicht der Funktionsskizze des Erfindungsgegenstandes,
- Fig. 2: eine perspektivische Ansicht der Vorrichtung zum Transport eines Filmstreifens der Erfindung,
- Fig. 3: eine Vergrößerung des Ausschnittes A aus Fig. 2, und
- Fig. 4: eine Explosionsdarstellung eines weiteren Ausführungsbeispiels.

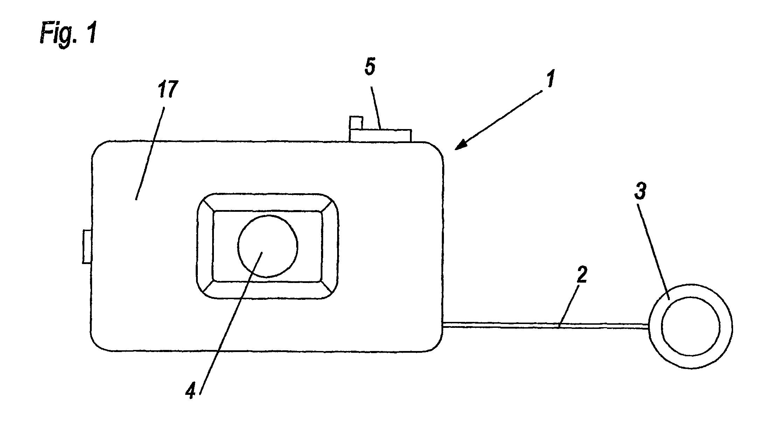

Fig. 1 zeigt skizzenhaft die Vorderansicht des erfindungsgemäßen Fotoapparates 1 an dessen Gehäuse 17 neben der Linse 4 ein Spulenknopf 5 angeordnet ist Der Spulenknopf 5 dient zum Zurückspulen des nach der Belichtung vollständig auf die Filmaufnahmewelle aufgespulten Filmstreifens. Seitlich ragt aus dem Gehäuse 17 das freie Ende einer als Zugelement dien-enden Schnur 2 heraus, an dem zur besseren Handhabung ein Halteelement 3 in Form eines Ringes angebracht ist. Die Öffnung (nicht dargestellt) aus der die Schnur 2, die aus verschiedensten flexiblen Materialien wie beispielsweise Kunststoff oder Naturfaser hergestellt sein kann, ins Freie ragt, ist günstigerweise mit geeigneten Mitteln lichtdicht verschlossen. Das Zurückspulen des auf die Filmaufnahmewelle aufgespulten Filmes kann, wenn es sich um eine Einwegkamera handelt, auch in der Dunkelkamera des Entwicklungslabors erfolgen, sodaß die Anordnung eines Spulenknopfes am Gehäuse nicht unbedingt notwendig ist. Eine weitere Möglichkeit des Zurückspulens des Filmes wird in späterer Folge näher erläutert.

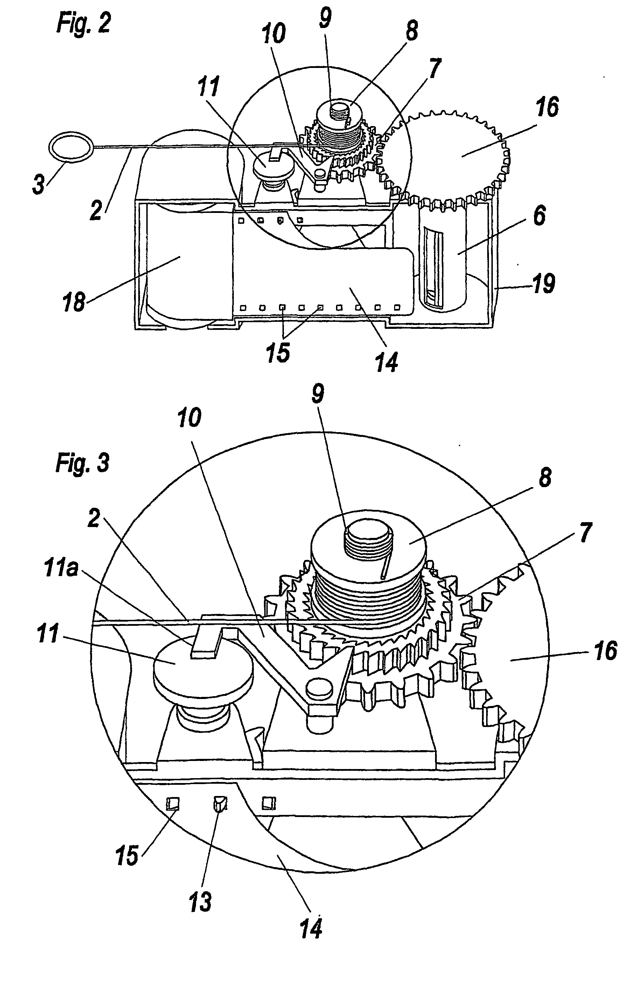

Bei der in den Fig. 2 und 3 dargestellten Vorrichtung zum schrittweisen Transport eines Filmstreifens 14 von einer Filmvorratsspule 18 auf eine Filmaufnahmewelle 6 ist die Schnur 2, an derem freien Ende ein Halteelement 3 angeordnet ist, mit ihrem anderen Ende auf eine Wickelspule 8 aufgewickelt. Die Wickelspule 8, an der eine Rückholfeder 9 angeordnet ist, treibt das Antriebsrad 7 an. Das Antriebsrad 7 greift wiederum in das Zahnrad 16 ein, das drehfest mit der Filmaufnahmewelle 6 verbunden ist, sodaß beim Drehen der Wickelwelle 8 durch Ziehen der Schnur 2 die Filmaufnahmewelle 6 über das Antriebsrad 7 in Rotation versetzt wird und derart der Film 14 auf die Wickelwelle 6 aufgewickelt wird. In das Antriebsrad 7 greift zusätzlich ein Sperrhebel 10 ein, der über eine Exzentwelle 11 mit dem Zählrad 13 verbunden ist.

Anhand des in Fig. 3 dargestellten Ausschnittes A wird nun die Funktionsweise des erfindungsgemäßen Fotoapparates erläutert. Durch das Ziehen an der Schnur 2 kommt es zu einer Drehbewegung der Wickelspule 8. Über die an der Wickelspule 8 angebrachten Freilauf-Mitnehmer (nicht dargestellt) wird das Antriebsrad 7 ebenfalls in Rotation versetzt. In weiterer Folge treibt das Antriebsrad 7 die Filmaufnahmewelle 6 über das Zahnrad 16 an. Dadurch wird der Film 14 aus der Filmvorratsspule 18 herausgezogen und nimmt das Zählrad 13 mit, das in Perforationen 15 des Filmes 14 eingreift. Nach einer vollen Umdrehung des Zählrades 13, welche genau einer Bildlänge entspricht, wird über eine Exzentwelle 11 mit einer Ausnehmung 11a und einem Sperrhebel 10 das Antriebsrad 7 gesperrt. Beim Loslassen der Schnur 2 wird diese, bedingt durch die von der Wickelspule 8 aufgezogene Rückholfeder 9 in das Kameragehäuse 17 zurückgeholt und auf die Wickelspule 8 wieder aufgewickelt. Durch neuerliches Ziehen kann nach erfolgter Belichtung der Filmtransport um ein weiteres Bild erfolgen.

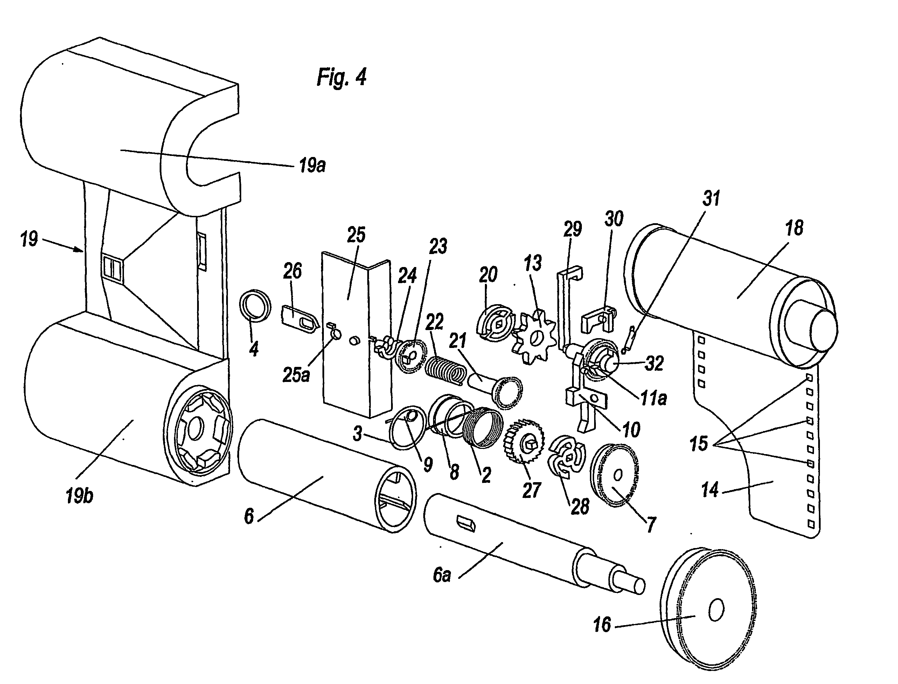

Die in Fig. 4 dargestellte Explosionszeichnung zeigt ein anderes Ausführungsbeispiel eines erfindungsgemäßen Fotoapparates. Die dargestellten Teile sind im zusammengebauten Zustand im wesentlichen im bzw. am Hauptkörper 19 aus Kunststoff befestigt. Die Filmpatrone 18 ist in der Aufnahme 19a untergebracht, während die Filmaufnahmewelle 6 im gegenüberliegenden Teil 19b angeordnet ist. Diese Aufnahmewelle 6 wird durch eine Innenwelle 6a vom Zahnrad 16 angetrieben, wobei der Film hinter der Blendenöffnung mit der Linse 4 vorbeiläuft, wie dies bei Fotoapparaten allgemein üblich ist. Neuartig ist der Antrieb des Zahnrads 16 und damit der Filmaufnahmewelle 6. Dieser erfolgt nämlich nicht wie beim Stand der Technik durch einen Aufzugshebel, durch direktes Antreiben des Zahnrades 16 mit dem Daumen oder motorisch, sondern über einen speziellen Seilzugmechanismus.

Dieser Seilzugmechanismus umfaßt eine Wickelspule 8, auf der ein Seil 2 mit einem am Ende befestigten Ring 3 aufgewickelt ist. Diese Wickelspule 8 ist von einer Rückholfeder 9 federbelastet, welche nach dem Loslassen der ausgezogenen Schnur 2 diese wieder auf die Wickelwelle aufwickelt. Die Wickelwelle treibt über das Kupplungszahnrad 27 und das Freilaufrad 28 das Zahnrad 7 an, welches im eingebauten Zustand in Eingriff mit dem Zahnrad 16 steht. Das Freilaufrad weist elastische gezahnte Arme auf, die in eine Innenverzahnung im Antriebsrad 7 eingreifen, und zwar nur in Ausziehrichtung der Schnur 2. Beim Einfahren der Schnur 2 (Aufwickeln auf der Wickelspule 8 durch die Rückholfeder 9) dreht sich das Freilaufrad 28 gegenüber dem Antriebsrad 7 frei durch.

Damit beim Ziehen an der Schnur 2 ein Bildtransport jeweils nur um einen gewünschten Betrag erfolgt, ist ein Sperrhebel 10 vorgesehen, der bei diesem Ausführungsbeispiel in die Zähne des Kupplungsrades 27 eingreift, sobald der Film um eine volle Bildlänge transportiert worden ist. Nach erfolgter Belichtung wird dieser Hebel 10 wieder freigegeben, wobei der Auslöser 29 bzw. ein daran befestigter Teil in nicht dargestellter Weise den Hebel 10 aus der Nut 11a des Teiles 11 herausschwenkt.

Die Steuerung des Hebels 10 erfolgt über den Hebel 30, der an dem exzentrischen Teil 32 entlangläuft und über eine Sperrhebelfeder 31 mit dem Sperrhebel 10 in Verbindung steht. Die Scheibe 11 und der exzentrische Teil 32 werden vom "Zählrad" 13 angetrieben, das in die Perforation 15 des Filmes eingreift. Insgesamt stellen somit die zuletzt beschriebenen Bauteile eine Einrichtung zur Erfassung des Filmvorschubs dar. Wenn der Filmvorschub soweit erfolgt ist, daß sich das Zählrad 13 und damit die Teile 11 und 32 um genau eine Umdrehung gedreht haben, wird über den Hebel 30, die Sperrhebelfeder 31 und den Sperrhebel 10 der Aufzug blockiert, bis die nächste Belichtung durch Betätigung des Auslösers erfolgt ist. Dieser Auslöser gibt, wie bereits erwähnt, den Sperrhebel und damit den Aufzug wieder frei.

Das Zählrad 13 treibt über ein Freilaufrad 20 auch noch den Verschlußmechanismus an, der im folgenden beschrieben wird. Der Verschlußmechanismus umfaßt ein Verbindungsrad 21, über das eine Aufziehfeder 22 für den Verschluß angetrieben wird. Diese Aufziehfeder 22 wirkt auf das Verschlußrad 23, welches zunächst blockiert ist Durch Betätigen des Auslösers wird dieses Verschlußrad in nicht näher dargestellter Weise freigegeben und dreht sich rasch unter der Wirkung der Aufziehfeder. Diese Bewegung wird über den Verschlußhebel 24 auf den eigentlichen Verschluß 26 übertragen, der damit kurz die Blendenöffnung 25a in der Verschlußplatte 25 öffnet. Insgesamt erfolgt also durch das Ziehen an der Schnur nicht nur der Filmtransport sondern indirekt über das Zählrad auch das Aufziehen des Verschlusses.

Wenn auch die Erfindung anhand dieses konkreten Ausführungsbeispieles beschrieben wurde, versteht es sich von selbst, daß Abwandlungen und Mittel, die geeignet sind, den Erfindungsgedanken umzusetzen, durchaus denkbar sind. So könnte beispielsweise die Wickelspule direkt auf der Filmaufnahmewelle angeordnet sein. Ebenso wäre es denkbar, den Freilauf der federbelasteten Wickelspule zu sperren und so über die Rückholfeder den Film von der Filmaufnahmewelle in die Filmvorratsspule zurückzuspulen.

## Patentansprüche

1. Fotoapparat mit einer Transportvorrichtung zum schrittweisen Transport eines Filmes um jeweils eine Bildlänge, bestehend aus einer Wickelspule, auf der ein Zugelement, vorzugsweise eine Schnur, aufgewickelt ist, und einer Filmaufnahmewelle, auf der der Film von einer Filmvorratsspule, insbesondere von einer eingelegten Filmpatrone aus aufwickelbar ist und die von der Wickelpulse antreibbar ist, wobei das freie Ende des Zugelements (2) durch eine Öffnung im Gehäuse (17) des Fotoapparates ins Freie ragt und der Film (14) durch Ziehen am Zugelement (2) jeweils schrittweise um eine Bildlänge transportiert wird, wobei die Wickelspule (8) zum automatischen Aufwickeln des Zugelementes (2) nach dem Transport des Filmes (14) um eine Bildlänge ausgebildet ist.

2. Fotoapparat nach Anspruch 1, **dadurch gekennzeichnet, daß** die Wickelspule (8) die Filmaufnahmewelle ohne Übersetzung oder über ein Zahnräder (7, 16) umfassendes Getriebe und/oder eine Rutschkupplung antreibt.

3. Fotoapparat nach Anspruch 2, **dadurch gekennzeichnet, daß** die Wickelspule (8) ein - vorzugsweise koaxial angeordnetes - Antriebszahnrad (7) antreibt, welches mit einem - vorzugsweise größeren - Zahnrad (16) in Eingriff steht, das drehfest mit der Filmaufnahmewelle (6) verbunden ist.

4. Fotoapparat nach einem der Ansprüche 1 bis 3, **gekennzeichnet durch** eine Einrichtung (11, 13, 30, 31, 32) zum Erfassen des Filmtransportweges und eine in Abhängigkeit von dieser Einrichtung (11, 13, 30, 31, 32) gesteuerte Sperre (10) der Filmtransportvorrichtung, die den Filmtransport bis zur nächsten Belichtung sperrt, sobald der Filmtransportweg genau einer Bildlänge entspricht.

5. Fotoapparat nach Anspruch 4, **dadurch gekennzeichnet, daß** die Einrichtung (11, 13, 30, 31, 32) zum Erfassen des Filmtransportweges ein in die Filmperforation eingreifendes Zählrad (13) und eine davon angetriebene Exzenterwelle (11, 32) aufweist, die einen Sperrhebel (10) betätigt.

6. Fotoapparat nach Anspruch 5, **dadurch gekennzeichnet, daß** der Sperrhebel (10) an der Filmaufnahmewelle (6), einem drehfest damit verbundenen Teil (16) oder am Getriebe (7, 16) zwischen Filmaufnahmewelle (6) und Wickelspule (8), insbesondere am Antriebszahnrad (7) angreift.

7. Fotoapparat nach einem der Ansprüche 1 bis 6, **dadurch gekennzeichnet, daß** die Wickelspule (8) durch eine Rückholfeder (9) federbelastet ist.

8. Fotoapparat nach einem der Ansprüche 1 bis 7, **dadurch gekennzeichnet, daß** die Wickelspule (8) mit der Filmaufnahmewelle bzw. dem Antriebsrad (7) in der der Zugrichtung des Zugelementes (2) entgegengesetzten Richtung freilaufend verbunden ist.

9. Fotoapparat nach einem der Ansprüche 1 bis 8, **dadurch gekennzeichnet, daß** an dem freien Ende des Zugelementes (2) ein Halteelement (3), beispielsweise ein Ring, angeordnet ist.

10. Fotoapparat nach einem der Ansprüche 1 bis 9, **gekennzeichnet durch** eine optische Anzeige zum Anzeigen des Abschlusses des Filmtransportes um eine Bildlänge nach dem Ziehen am Zugelement.

11. Fotoapparat nach einem der Ansprüche 1 bis 10, **dadurch gekennzeichnet, daß** die sich durch Ziehen am Zugelement drehende Wickelspule direkt oder indirekt eine federbelastete Verschlußeinrichtung (20, 21, 22, 23, 24) zum Betätigen eines zumindest eine Blende (25a) verschließenden Verschlusses (26) aufzieht, der nach Betätigen eines Auslösers (29) die Blende(n) (25a) zur Filmbelichtung kurz freigibt.

12. Fotoapparat nach Anspruch 11, **dadurch gekennzeichnet, daß** der von der Wickelspule über die Filmaufnahmewelle (6) transportierte Film (14) ein mit seiner Perforation in Eingriff stehendes Zahnrad (13) antreibt, welches die federbelastete Verschlußeinrichtung aufzieht.

13. Fotoapparat nach einem der Ansprüche 1 bis 12, **dadurch gekennzeichnet, daß** er eine Einwegkamera ist.

14. Verfahren zum Transport eines Filmes in einem Fotoapparat nach einem der Ansprüche 1 bis 13, **dadurch gekennzeichnet, daß** durch das Ziehen am Zugelement die Wickelspule gedreht und gleichzeitig deren Rückholfeder gespannt wird sowie der Film um eine Bildlänge bewegt und auf die mit der Wickelspule antriebsverbundene Filmaufnahmewelle aufgewickelt wird und beim Loslassen des Zugelementes die federbelastete Wickelspule in die Ausgangsposition zurückkehrt und dabei das Zugelement wieder auf die Wickelspule aufgewickelt wird.

## Claims

1. A camera having a transport device for stepwise transport of a film in each case by the length of a respective picture, consisting of a winding reel on which a pull element, preferably a cord, is wound, and a film take-up shaft drivable by the winding reel, on which film take-up shaft the film can be wound from a film supply spool, in particular from an inserted film cartridge, wherein the free end of the pull element (2) projects into the open through an opening in the housing (17) of the camera and the film (14) is transported stepwise by the length of a picture by pulling on the pull element (2), wherein the winding reel (8) is adapted for automatically winding on the pull element (2) after transport of the film (14) by the length of a picture.

2. A camera as set forth in claim 1 **characterized in that** the winding reel (8) drives the film take-up shaft without a step-up transmission means or by way of a transmission including gears (7, 16) and/or a slipping clutch.

3. A camera as set forth in claim 2 **characterized in that** the winding reel (8) drives a - preferably coaxially arranged - drive gear (7) which is in engagement with a - preferably larger - gear (16) which is non-rotatably connected to the film take-up shaft (6).

4. A camera as set forth in one of claims 1 through 3 **characterized by** a device (11, 13, 30, 31, 32) for detecting the film transport distance and a locking means (10) of the film transport device, which is controlled in dependence on said detection device (11, 13, 30, 31, 32) and which locks the film transport until the next exposure as soon as the film transport distance precisely corresponds to the length of a picture.

5. A camera as set forth in claim 4 **characterized in that** the device (11, 13, 30, 31, 32) for detecting the film transport distance comprises a counting wheel (13) engaging into the film perforations and an eccentric shaft (11, 32) which is driven thereby and which actuates a locking lever (10).

6. A camera as set forth in claim 5 **characterized in that** the locking lever (10) engages the film take-up shaft (6), a member (16) non-rotatably connected thereto or the transmission means (7, 16) between the film take-up shaft (6) and the winding reel (8), in particular the drive gear (7).

7. A camera as set forth in one of claims 1 through 6 **characterized in that** the winding reel (8) is spring-loaded by a return spring (9).

8. A camera as set forth in one of claims 1 through 7 **characterized in that** the winding reel (8) is connected to the film take-up shaft or the drive wheel (7) in freewheeling relationship in the direction opposite to the pulling direction of the pull element (2).

9. A camera as set forth in one of claims 1 through 8 **characterized in that** a holding element (3), for example a ring, is arranged at the free end of the pull element (2).

10. A camera as set forth in one of claims 1 through 9 **characterized by** an optical display means for displaying the conclusion of film transport by the length of a picture after pulling on the pull element.

11. A camera as set forth in one of claims 1 through 10 **characterized in that** the winding reel which is rotated by pulling on the pull element directly or indirectly stresses a spring-loaded shutter device (20, 21, 22, 23, 24) for actuating a shutter (26) closing at least one aperture (25a), which after actuation of a shutter release (29) briefly opens the aperture(s) (25a) for film exposure.

12. A camera as set forth in claim 11 **characterized in that** the film (14) which is transported by the winding reel over the film take-up shaft (6) drives a gear (13) which is in engagement with the film perforations and which stresses the spring-loaded shutter device.

13. A camera as set forth in one of claims 1 through 12 **characterized in that** it is a disposable camera.

14. A method of transporting a film in a camera as set forth in one of claims 1 through 13 **characterized in that** by pulling on the pull element the winding reel is rotated and at the same time the return spring thereof is stressed and the film is moved by the length of a picture and wound onto the film take-up shaft drivingly connected to the winding reel and when the pull element is released the spring-loaded winding reel returns to the starting position and **in that** case the pull element is wound onto the winding reel again.

## Revendications

1. Appareil photo avec un dispositif de transport pour le transport progressif d'un film de respectivement une longueur d'image comprenant une bobine d'enroulement, sur laquelle un élément de traction, de préférence un fil souple, est enroulé, et un axe récepteur de film, sur lequel le film peut être enroulé à partir d'une bobine de stockage de film, en particulier une cartouche de film insérée, et qui peut être entraîné par la bobine d'enroulement, moyennant quoi l'extrémité libre de l'élément de traction (2) dépasse à l'air libre par une ouverture située dans le boîtier (17) de l'appareil photo et le film (14) est transporté respectivement pas à pas d'une longueur d'image en tirant sur l'élément de traction (2), la bobine d'enroulement (8) étant réalisée pour l'enroulement automatique de l'élément de traction (2) après le transport du film (14) d'une longueur d'image.

2. Appareil photo selon la revendication 1, **caractérisé en ce que** la bobine d'enroulement (8) entraîne l'axe récepteur de film sans transmission ou au moyen d'un engrenage comprenant des roues dentées (7, 16) et/ou d'un accouplement glissant.

3. Appareil photo selon la revendication 2, **caractérisé en ce que** la bobine d'enroulement (8) entraîne une roue dentée d'entraînement (7) - disposée de préférence de façon coaxiale -, qui est en prise avec une roue dentée (16) - de préférence plus grande - , qui est reliée de façon solidaire en rotation à l'axe récepteur de film (6).

4. Appareil photo selon l'une quelconque des revendications 1 à 3, **caractérisé par** un système (11, 13, 30, 31, 32) pour l'enregistrement de la course de transport de film et ainsi un blocage (10), commandé en fonction de ce système (11, 13, 30, 31, 32), du dispositif de transport de film, qui bloque le transport de film jusqu'à la prochaine exposition dès que la course de transport de film correspond exactement à une longueur d'image.

5. Appareil photo selon la revendication 4, **caractérisé en ce que** le système (11, 13, 30, 31, 32) pour l'enregistrement de la course de transport de film présente une roue de comptage (13) s'engageant dans la perforation du film et un axe d'excentrique (11, 32) entraîné par celle-ci, qui actionne un levier de blocage (10).

6. Appareil photo selon la revendication 5, **caractérisé en ce que** le levier de blocage (10) s'applique sur l'axe récepteur de film (6), une partie (16) reliée à celui-ci de façon solidaire en rotation ou sur l'engrenage (7,16) entre l'axe récepteur de film (6) et la bobine d'enroulement (8), en particulier sur la roue dentée d'entraînement (7).

7. Appareil photo selon l'une quelconque des revendications 1 à 6, **caractérisé en ce que** la bobine d'enroulement (8) est sollicitée par un ressort de rappel (9).

8. Appareil photo selon l'une quelconque des revendications 1 à 7, **caractérisé en ce que** la bobine d'enroulement (8) est reliée de façon libre à l'axe récepteur de film ou à la roue d'entraînement (7) dans le sens opposé à la direction de traction de l'élément de traction (2).

9. Appareil photo selon l'une quelconque des revendications 1 à 8, **caractérisé en ce qu'**un élément de retenue (3), par exemple une bague est disposée sur l'extrémité libre de l'élément de traction (2).

10. Appareil photo selon l'une quelconque des revendications 1 à 9, **caractérisé par** un affichage optique pour l'affichage de la fin du transport du film d'une longueur d'image après avoir tiré sur l'élément de traction.

11. Appareil photo selon l'une quelconque des revendications 1 à 10, **caractérisé en ce que** la bobine d'enroulement tournant en tirant sur l'élément de traction tire vers le haut directement ou indirectement un système de fermeture (20, 21, 22, 23, 24) sollicité par un ressort pour l'actionnement d'une fermeture (26) fermant au moins un diaphragme (25a), laquelle libère brièvement le (les) diaphragme(s) (25a) pour l'exposition du film après l'actionnement d'un déclencheur (29).

12. Appareil photo selon la revendication 11, **caractérisé en ce que** le film (14) transporté par la bobine d'enroulement au moyen de l'axe récepteur de film entraîne une roue dentée (13) en prise avec sa perforation, laquelle tire vers le haut le système de fermeture sollicité par ressort.

13. Appareil photo selon l'une quelconque des revendications 1 à 12, **caractérisé en ce qu'**il s'agit d'un appareil photo jetable.

14. Procédé pour le transport d'un film dans un appareil photo selon l'une quelconque des revendications 1 à 13, **caractérisé en ce que**, en tirant sur l'élément de traction, la bobine d'enroulement est tournée et son ressort de rappel est en même temps tendu et le film est déplacé d'une longueur d'image et l'axe récepteur de film, relié à la bobine d'enroulement au niveau de l'entraînement, est enroulé et, lorsqu'on relâche l'élément de traction, la bobine d'enroulement sollicitée par ressort revient dans la position de départ et l'élément de traction est enroulé à nouveau sur la bobine d'enroulement.
